# FASCICULE DE BREVET EUROPEEN

(11) **EP 2 136 120 B1**
(45) Date de publication et mention de la délivrance du brevet: **05.01.2011**
(21) Numéro de dépôt: 09162820.6
(22) Date de dépôt: 16.06.2009
(51) Int. Cl.: F16L 33/035, F16B 2/08

(54) **Collier de serrage à ergot d'accrochage embouti**
Rohrschelle mit verformtem Rasthaken
Pipe clamp with pressed out engagement hook

(30) Priorité: 18.06.2008 FR 0854007
(43) Date de publication de la demande: 23.12.2009
(73) Titulaire: Etablissements Caillau, 92130 Issy-les-Moulineaux (FR)
(72) Inventeur: Racoillet, Guillaume, 41130 Selles sur Cher (FR); Mesnard, Eric, 41250 Tours en Sologne (FR); Jacquelin, Arnaud, 41230 Mur de Sologne (FR)
(74) Mandataire: Intès, Didier Gérard André

(56) Documents cités:
- EP-A- 0 846 906
- GB-A- 2 235 948
- US-A- 4 713 863

## Description

La présente invention concerne un collier de serrage réalisé à partir d'une bande de métal enroulée sur elle-même, comprenant un ergot d'accrochage formé en saillie radiale vers l'extérieur au voisinage de la première extrémité de la bande et une oreille, formée en saillie radiale vers l'extérieur au voisinage de la deuxième extrémité de la bande et présentant une lumière dans laquelle peut être insérée une partie d'extrémité libre de l'ergot pour l'accrochage et le serrage du collier alors que l'oreille coiffe une partie de pied de l'ergot, le collier présentant en outre des surfaces de prise pour un outil de serrage, qui sont en saillie radiale vers l'extérieur et sont respectivement situées à l'arrière de l'oreille et à l'arrière de l'ergot.

Un collier de ce type est connu par US 4,713,863. Dans ce collier, l'ergot d'accrochage est formé au sommet d'une première oreille, tandis que la lumière dans laquelle pénètre cet ergot pour réaliser l'accrochage est formée sur le sommet une deuxième oreille. Ces oreilles ont une forme globalement en L renversé et sont réalisées par des plis successifs, qui s'étendent transversalement sur toute la largeur de la bande. De plus, la hauteur des oreilles, mesurée à partir du plan de la bande, est de l'ordre des 2/3 du rayon du collier. Il en résulte que les oreilles sont très flexibles de sorte que le collier présente une rigidité globale relativement faible. De plus, la grande hauteur radiale des oreilles peut présenter un inconvénient pour certaines applications, en particulier lorsque le collier sert à serrer une pièce rotative, car le centre de gravité du collier est très éloigné du centre géométrique du cercle que forme la bande du collier lorsque celui-ci est fermé.

EP 0 846 906 divulgue un autre collier du type précité, dans lequel l'ergot d'accrochage est formé par un double pli radial qui s'étend transversalement sur toute la largeur de la bande. Pour rigidifier ce double pli, des nervures de rigidification sont formées au pied de l'ergot. Toutefois, la nervure qui est située à l'arrière de l'ergot forme une rampe qui constitue une gêne pour la venue en prise d'un outil de serrage du genre pince avec le pied de l'ergot. L'oreille présente une forme globalement en L renversé, et est formée par une succession de plis qui s'étendent transversalement sur toute la largeur de la bande. L'oreille est rigidifiée dans le coude du L par une nervure. Ces rigidifications (pied de l'ergot et coude de l'oreille) peuvent s'avérer insuffisantes pour certaines applications. De plus, l'oreille et l'ergot d'accrochage présentent une hauteur radiale de l'ordre de la moitié du rayon du cercle formé par le collier lorsqu'il est fermé. Cette hauteur radiale très significative risque également de déporter le centre de gravité par rapport au centre géométrique du cercle précité, ce qui pose des difficultés précédemment évoquées lorsque le collier est destiné à serrer une pièce rotative.

L'invention vise à améliorer l'état de la technique précité en faisant en sorte que l'ergot d'accrochage puisse être extrêmement rigide, sans que cette rigidité ne soit acquise au détriment de la surface de prise située à l'arrière de cet ergot, et tout en permettant que l'ergot puisse présenter une hauteur radiale faible.

Ce but est atteint grâce au fait que l'ergot et la surface de prise qui est située à l'arrière de cet ergot sont formés dans un bossage commun et présentent des joues latérales, relevées par rapport au plan de la bande, qui leur sont communes.

L'ergot étant formé dans le bossage commun, il présente une grande rigidité. En effet, le bossage est obtenu par un procédé du type emboutissage, et non pas par des plis transversaux s'étendant sur toute la largeur de la bande. De ce fait, sa rigidité est beaucoup plus grande que celle d'une forme qui serait obtenue par des pliages transversaux. L'ergot est rattaché à la partie du bossage qui porte la surface de prise par les joues latérales qui contribuent grandement à sa rigidité. De plus, étant formé par un bossage, il peut présenter une faible hauteur radiale.

Avantageusement, l'ergot présente une extrémité libre d'accrochage formée par le bord d'une découpe, les joues latérales communes s'étendant, sur les côtés respectifs de l'ergot, entre le plan de la bande et une extrémité du bord de la découpe.

Le bord de la découpe offre une possibilité d'accrochage, dans la lumière de l'oreille, qui est à la fois aisée à obtenir et extrêmement fiable.

De préférence, le collier de serrage présente des marges latérales s'étendant, dans le plan de la bande, de part et d'autre des joues latérales communes.

La présence de ces marges latérales rigidifie encore le bossage commun. De préférence, elles présentent une largeur de l'ordre d'au moins environ 1/8^{ème}, de préférence entre 1/7^{ème} et 1/5^{ème}, de la largeur totale de la bande.

Avantageusement, l'ergot présente une hauteur radiale maximale au plus sensiblement égale à la hauteur radiale maximale de la partie du bossage commun dans laquelle est formée la surface de prise située à l'arrière de l'ergot, et le bossage commun présente un décrochement à l'arrière de l'ergot, adjacent audit ergot.

Ainsi, l'ergot est situé dans l'encombrement radial du bossage commun et le décrochement situé à l'arrière de l'ergot permet au bord avant de la lumière de l'oreille d'accrochage de venir se placer en avant de l'ergot, à une hauteur inférieure à la hauteur radiale maximale de ce dernier, pour réaliser un accrochage fiable. L'ergot peut ainsi être réalisé sur une très faible hauteur radiale.

Avantageusement, l'oreille présente une partie avant, dans laquelle est formée la lumière et qui se rapproche du plan de la bande par rapport à une partie arrière de l'oreille. De plus, avantageusement, la lumière de l'oreille présente un bord avant qui est sensiblement situé dans le plan de la bande.

De préférence, l'oreille est formée par un bossage d'oreille, de part et d'autre duquel sont ménagées des marges latérales qui s'étendent sensiblement dans le plan de la bande. Ces dispositions permettent également à l'oreille d'être réalisée sur une très faible hauteur radiale. De plus, elle présente une rigidité importante du fait de sa formation dans un bossage réalisé par exemple par emboutissage.

L'invention vise également à réaliser un collier de serrage dans lequel le serrage est obtenu par accrochage d'une oreille d'accrochage sur un ergot d'accrochage en saillie radiale, réalisant une continuité d'appui du collier sur l'objet devant être serré par ce collier, même sous l'oreille, dans lequel sont prévus des moyens de pré-accrochage permettant de fermer le collier et de le maintenir à l'état fermé lorsque l'oreille n'est pas accrochée sur l'ergot, et dans lequel la quantité de matériau utilisé est limitée. Il s'agit en particulier d'éviter que la bande ait une longueur trop importante au regard du diamètre du collier.

Ainsi, selon un mode de réalisation avantageux, la première extrémité de la bande présente une bavette qui s'étend à l'avant de l'ergot et qui porte une saillie de pré-accrochage, tandis que la deuxième extrémité de la bande présente, à l'arrière de l'oreille, une fente longitudinale de pré-accrochage dans laquelle ladite saillie est engagée pour réaliser un pré-accrochage du collier, et la saillie de pré-accrochage est formée dans une portion d'extrémité libre de la bavette ayant une largeur inférieure à la largeur de la bande, tandis que la fente de pré-accrochage s'étend, en s'éloignant de l'oreille, au moins jusqu'à un renfoncement interne apte à recevoir ladite portion d'extrémité libre de la bavette.

La bavette sert à la fois à réaliser le pré-accrochage et la continuité d'appui sur l'objet devant être serré. Dans la mesure où la saillie de pré-accrochage est formée à l'extrémité libre de cette bavette, celle-ci peut avoir juste la longueur requise à cet effet. De plus, à l'état serré, cette portion d'extrémité libre de la bavette dans laquelle est formée la saillie de pré-accrochage vient s'engager dans le renfoncement interne pour éviter une discontinuité de l'appui à l'extrémité libre de cette bavette. Par définition, le renfoncement interne présente des côtés qui sont sensiblement dans le plan de la bande, de sorte que l'extrémité libre de la bavette présente une largeur inférieure à la largeur de la bande pour s'insérer entre ces côtés.

Avantageusement, la saillie de pré-accrochage est formée par une languette, découpée dans la bande et redressée, et la découpe dans laquelle est formée cette languette est décalée par rapport à un axe longitudinal médian de la bande.

La saillie de pré-accrochage étant découpée dans la portion d'extrémité libre de la bavette qui a une largeur réduite par rapport à celle de la bande, le fait de décaler la découpe précitée par rapport à un axe longitudinal médian de la bande permet de réaliser une languette de longueur suffisante pour, une fois redressée, présenter la hauteur de saillie requise, sans pour autant que les bords de la découpe ne soient trop proches des bords longitudinaux de la bavette. La fente de pré-accrochage peut présenter une largeur relativement importante, tout en restant centrée sur l'axe longitudinal médian de la bande, pour recevoir cette saillie de pré-accrochage décalé.

Toutefois, il est avantageux que la fente de pré-accrochage soit également décalée par rapport audit axe longitudinal, dans le même sens que la découpe dans laquelle est formée la languette. Dans ce cas, la largeur de la bande de pré-accrochage peut être sensiblement égale à l'épaisseur de la bande, qui est également l'épaisseur de la saillie de pré-accrochage de sorte que cette fente ne limite pas sensiblement la rigidité du collier.

L'invention concerne également un procédé pour fabriquer un collier de serrage, dans lequel on fournit une bande de métal, on réalise un ergot d'accrochage en saillie radiale vers l'extérieur au voisinage de la première extrémité de la bande, on réalise, en saillie radiale vers l'extérieur au voisinage de la deuxième extrémité de la bande, une oreille présentant une lumière dans laquelle peut être insérée une partie d'extrémité libre de l'ergot pour l'accrochage et le serrage du collier alors que l'oreille coiffe une partie de pied de l'ergot, on réalise des surfaces de prise pour un outil de serrage qui sont en saillie radiale vers l'extérieur et sont respectivement situées à l'arrière de l'oreille et à l'arrière de l'ergot, et on enroule la bande sur elle-même.

L'invention vise à proposer un procédé permettant de réaliser un collier dont l'ergot de pré-accrochage puisse présenter une faible hauteur radiale, tout en étant extrêmement rigide, et sans nuire à la qualité de la prise d'outil sur la surface de prise située à l'arrière de cet ergot. Dans le même temps, il s'agit de réaliser cet ergot et la surface de prise précitée de manière simple, économique et fiable.

Ce but est atteint grâce au fait que, pour réaliser l'ergot et la surface de prise qui est située à l'arrière de l'ergot, on forme un bossage commun présentant des joues latérales relevées par rapport au plan de la bande.

Le bossage commun peut être réalisé de manière simple, en présentant à la fois l'ergot et la surface de prise situés à l'arrière de ce dernier, de sorte que l'ergot présente une forte rigidité. De plus, le fait de préserver les joues latérales précitées permet de rigidifier encore le bossage.

Avantageusement, après avoir réalisé un bossage commun intermédiaire, on forme le bossage commun en formant l'ergot dans une partie avant de ce bossage commun, on forme la surface d'accrochage dans une partie arrière de ce bossage et on ménage, à l'arrière de l'ergot, un décrochement adjacent à cet ergot.

Ainsi, l'ergot peut être réalisé de manière particulièrement simple tout en étant extrêmement rigide.

Avantageusement, pour former l'ergot, on réalise une découpe sensiblement transversale dans le bossage commun, de manière à délimiter lesdites parties avant et arrière de ce bossage de part et d'autre de la découpe.

Le bord de la découpe située du côté de l'ergot forme alors une surface d'accrochage pour le bord correspondant de la lumière de l'oreille, ce qui favorise un accrochage extrêmement fiable.

Il est également avantageux que, pour former l'ergot et la surface de prise située à l'arrière de l'ergot, on relève la partie avant du bossage commun intermédiaire et on relève une portion d'extrémité arrière de la partie arrière du bossage commun intermédiaire en formant, dans ladite partie arrière, le décrochement adjacent à l'ergot.

Le bossage commun peut être initialement réalisé sur une très faible hauteur radiale dans une première passe d'outils. Dans une deuxième passe, on peut en même temps relever la partie avant du bossage commun et la partie arrière de ce bossage en formant le décrochement entre les deux. La découpe précitée, si elle est présente, peut être réalisée dans la même deuxième passe d'outils.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue en perspective du collier selon l'invention, à l'état pré-accroché, non serré ;
- la figure 2 est une vue de côté de la figure 1, prise selon la flèche II ;
- la figure 3 est une vue de dessus de la figure 2, prise selon la flèche III ;
- la figure 4 est une vue analogue à la figure 1, montrant le collier à l'état serré ;
- la figure 5 est une vue en perspective du collier de la figure 4, pris de dessous, selon la flèche V ; et
- les figures 6A et 6B illustrent deux étapes successives de la réalisation du bossage commun.

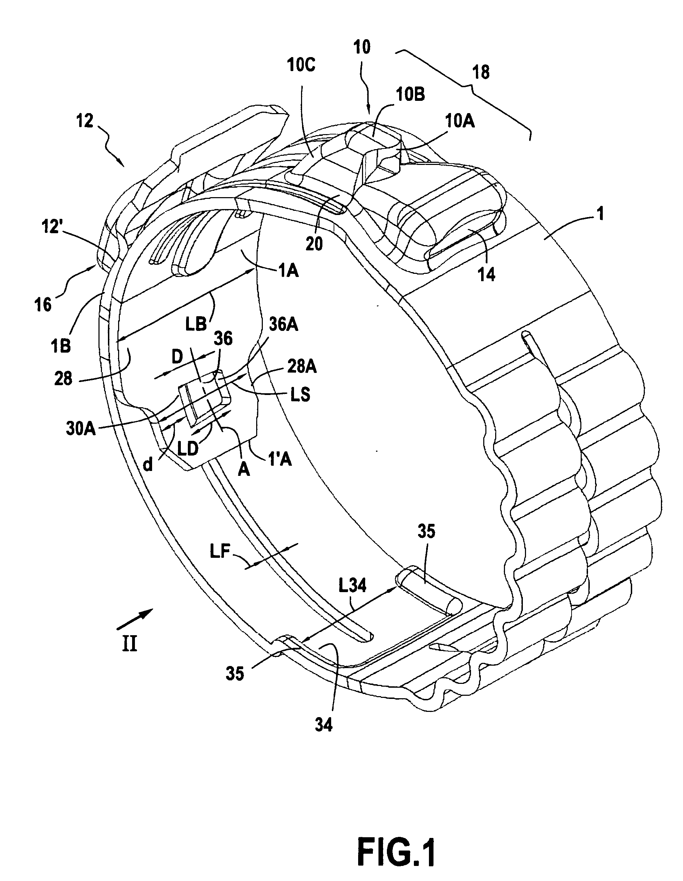

Le collier de serrage selon l'invention est réalisé à partir d'une bande de métal 1 enroulée sur elle-même. Il s'agit d'un métal de type classique, la bande étant en particulier découpée à partir d'un feuillard convenant à la réalisation des colliers de serrage. On voit que, même à l'état non serré du collier représenté sur la figure 1, la bande est enroulée sur elle-même sur plus de 360°, de sorte que les deux extrémités de cette bande se recouvrent. Selon le diamètre du collier à l'état serré, la plage angulaire de recouvrement peut être de 20° (pour un diamètre de l'ordre de 100 mm ou davantage) à 90° (pour un diamètre de l'ordre de 20 mm).

Un ergot d'accrochage 10 est formé en saillie radiale vers l'extérieur au voisinage de la première extrémité 1A de la bande. Une oreille d'accrochage 12 est formée en saillie radiale vers l'extérieur au voisinage de la deuxième extrémité 1B de la bande.

Dans toute la suite, par convention, on considèrera que, pour un élément situé dans une portion d'extrémité de la bande, le sens « vers l'avant » s'appréciera en allant de l'élément en question vers l'extrémité libre de la portion d'extrémité considérée. Ainsi, considéré par rapport à l'ergot d'accrochage 10, le sens vers l'avant est indiqué par la flèche F1, tandis que le sens vers l'arrière est indiqué par la flèche F2. De même, lorsque l'on considère l'oreille, le sens vers l'avant est indiqué par la flèche G1 et le sens vers l'arrière est indiqué par la flèche G2.

Egalement par convention, on considèrera que, "le plan de la bande" correspond aux zones de la bande enroulée sur elle-même, non déformées vers l'extérieur ou vers l'intérieur. Ainsi, "le plan de la bande" est sur la figure 1 matérialisé par un cercle C défini par le collier, ayant un centre géométrique O.

Encore par convention, le sens « vers l'extérieur » signifie le sens allant en s'éloignant de ce centre géométrique ou opposé à ce centre géométrique. Ainsi, la face interne de la bande est celle qui est tournée vers le centre O, tandis que la face externe est la face opposée.

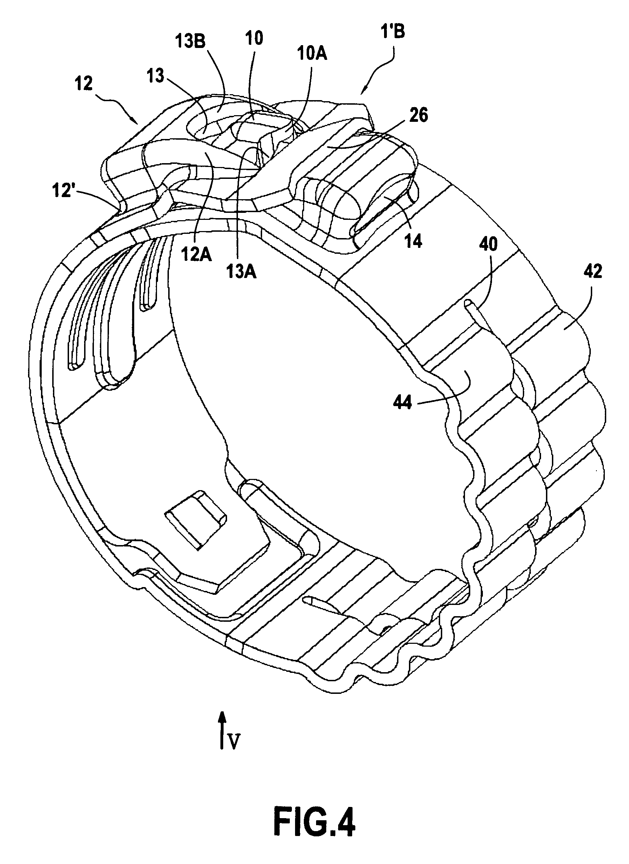

Comme on le voit mieux sur la figure 4, l'oreille 12 présente une lumière 13 dans laquelle est inséré l'ergot 10 à l'état serré du collier. Dans ce cas, le bord libre 10A de l'ergot coopère avec le bord avant 13A de la lumière. On voit sur la figure 4, que la lumière 13 présente une longueur, mesurée dans la direction longitudinale de la bande, qui est suffisante pour que, à l'état serré, toute la tête 10B de l'ergot 10 passe dans cette lumière 13. De manière générale, il suffit qu'une partie d'extrémité libre de l'ergot, dans laquelle la hauteur maximale H de cet ergot est mesurée par rapport au plan de la bande dépasse dans cette lumière. Dans la position serrée représentée sur la figure 4, l'oreille coiffe une partie de pied 10C de l'ergot, c'est-à-dire que, considérée par rapport à l'oreille, cette partie de pied est située en arrière du bord arrière 12B de l'oreille.

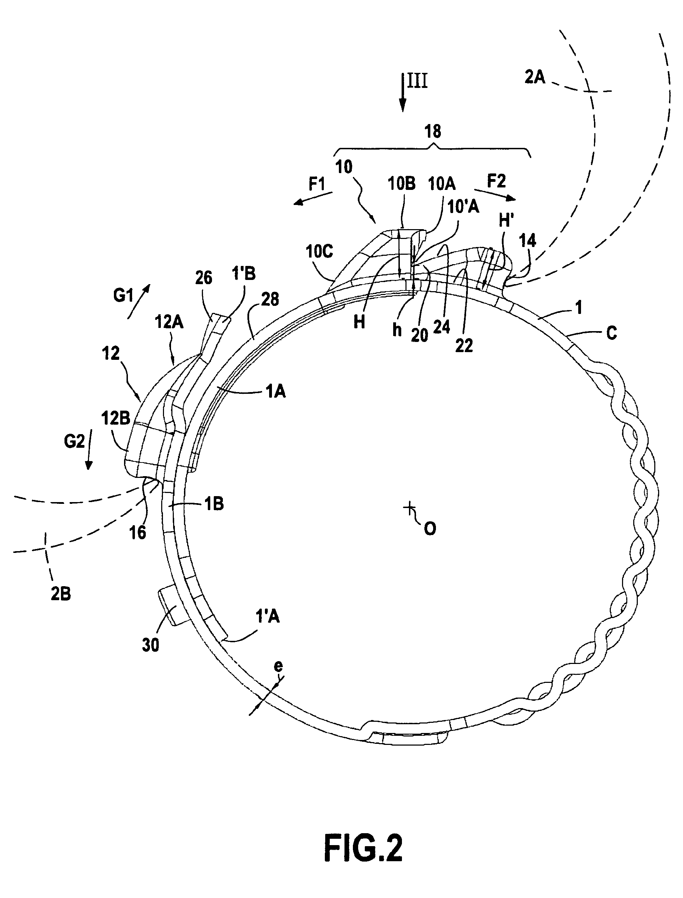

Comme on le voit mieux sur la figure 2, le collier présente des surfaces de prise pour un outil de serrage, qui sont également en saillie radiale vers l'extérieur. Cet outil étant en particulier du genre pince, on a montré en traits interrompus ses deux mâchoires, 2A et 2B. On voit ainsi une première surface de prise 14, située en arrière de l'ergot 10 et une deuxième surface de prise 16 située en arrière de l'oreille 12.

L'ergot 10 et la surface de prise 14 sont formés dans un bossage commun 18. Ils présentent des joues latérales 20, qui sont relevées par rapport au plan de la bande et qui leur sont communes. Ces joues latérales s'étendent sur chacun des deux côtés longitudinaux du bossage commun 18. Sur la figure 2, on voit que les joues latérales 20 s'étendent, sur les côtés respectifs de l'ergot, entre le plan C de la bande et une extrémité 10'A du bord de la découpe formant le bord d'accrochage 10A de l'ergot. On voit également que ces joues latérales s'étendent sur une hauteur h qui est avantageusement de l'ordre d'au moins sensiblement 1/4 de la hauteur maximale H de l'ergot, par exemple de l'ordre de 1/3 de cette hauteur maximale.

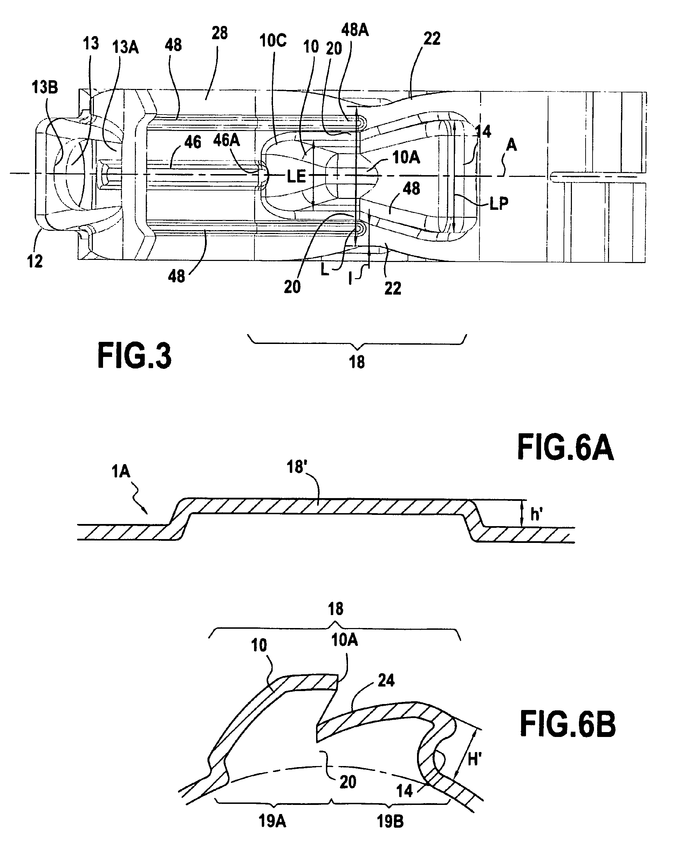

On notera que la figure 2 montre une seule des joues latérales, car elle est une vue de côté du collier. La conformation est analogue de l'autre côté, le bossage commun étant symétrique par rapport à l'axe longitudinal médian A de la bande, ainsi qu'on le voit notamment sur la figure 3, sur laquelle on remarque également que l'oreille 12 est également symétrique par rapport à cet axe A.

Sur les figures 2 et 3, on voit que le bord de la découpe 10A présente, en vue de dessus, une forme convexe. Ceci favorise l'accrochage sur le bord 13A de la lumière 13 de l'oreille. Sur la figure 3, on voit encore que le collier présente des marges latérales 22 qui s'étendent de part et d'autre des joues latérales communes 20. Comme on le comprend mieux en considérant la figure 2, ces marges latérales 22 s'étendent dans le plan C de la bande. La largeur I de chaque marge latérale 22 est sensiblement égale à 1/7^{ème} ou davantage de la largeur L de la bande, à l'endroit de la mesure. On remarque sur la figure 3 que, dans la région centrale du bossage commun 18, la largeur de la bande est localement diminuée. Ainsi, la matière déformée pour réaliser le bossage présente une épaisseur qui n'est pas notablement diminuée par rapport à l'épaisseur e de la bande. Ceci est particulièrement important dans la région médiane du bossage commun 18, dans laquelle se trouve la zone de jonction entre l'ergot 10 et la partie arrière du bossage, et dans laquelle le fait d'obtenir une rigidité élevée est particulièrement important.

On voit encore sur la figure 3 que l'ergot 10 est formé dans une partie du bossage commun 18 qui est moins large que la surface de prise d'outils 14 située à l'arrière de l'ergot. En l'espèce, la largeur LE de l'ergot 10 est sensiblement égale aux 2/3 de la largeur LP de la surface de prise 14. Ceci permet d'obtenir une surface de prise très large, donnant suffisamment de prise à l'outil de serrage, tout en réalisant un ergot d'accrochage 10 de largeur moindre, lui permettant d'être coiffé par l'oreille 12, elle-même formée par un bossage qui ne s'étend pas sur toute la largeur de la bande.

Les surfaces de prise 14 et 16 présentent les formes en cuvette, ce qui favorise la prise de l'outil de serrage du genre pince.

On voit sur la figure 2 que la hauteur radiale maximale H de l'ergot 10 est sensiblement égale à la hauteur radiale maximale H' de la partie de bossage commun 18 dans laquelle est formée la surface de prise 14. Les hauteurs H et H' sont avantageusement de l'ordre de 2 à 5 mm, de préférence de l'ordre de 2,5 à 3 mm, pour un collier dont la bande a une épaisseur de l'ordre de 0,6 à 0,8 mm. Il convient de relever que, pour favoriser l'accrochage, la hauteur H peut être très légèrement supérieure à la hauteur H'. En particulier, l'expression « sensiblement égale » recouvre le fait que H soit comprise entre H' et 1,3.H', de préférence entre 1,1.H' et 1,2.H'. Sur cette figure, on voit également que le bossage commun présente un décrochement 24 à l'arrière de l'ergot, adjacent à cet ergot. En effet, le bas du décrochement 24 démarre à l'aplomb du bord libre 10A de l'ergot. A partir de cet aplomb, le décrochement remonte vers l'arrière jusqu'à la hauteur H'. Ce décrochement ménage ainsi, immédiatement à l'arrière de l'ergot, le dégagement nécessaire pour que le bord 10B de la lumière 13 formée dans l'oreille 12 vienne se placer sous le bord 10A de l'ergot 10. La matière reste présente dans le décrochement 24, de manière à éviter tout affaiblissement du bossage commun 18, dont la seule découpe est l'incision du bossage commun, qui sert à former le bord 10A de l'ergot 10.

On voit d'ailleurs que l'oreille 12 présente une partie avant 12A, qui est celle dans laquelle est formée la lumière 13, qui se rapproche du plan C de la bande par rapport à la partie arrière 12B de cette oreille. Ainsi, cette partie arrière 12 est, comme la partie arrière du bossage 18, suffisamment relevée par rapport au plan de la bande pour que les surfaces de prise 14 et 16 présentent une hauteur suffisante, sensiblement égale à la hauteur H' précitée, aussi bien pour le bossage 18 que pour l'oreille 12. Cependant, dans sa partie avant 12A, l'oreille est profilée pour se rapprocher du plan de la bande, de manière à réaliser l'accrochage sur une hauteur radiale minimum. On voit que la partie d'extrémité libre 1'B de la deuxième extrémité 1B de la bande présente une partie centrale 26 légèrement relevée, pour épouser la pente du décrochement 24 et venir se caler latéralement sur ce dernier. La largeur de cette partie centrale 26 relevée est légèrement supérieure à la largeur LE de l'ergot 10 et correspond à la largeur de la face externe du décrochement 24, de sorte que, lorsque l'oreille vient coiffer cet ergot au cours de l'accrochage, elle s'auto-centre sur cet ergot, puis sur ce décrochement.

Le rapprochement de la partie avant 12A de l'oreille par rapport au plan est tel que le bord avant 13A de la lumière 13 est sensiblement situé dans le plan de la bande.

La tête 10B de l'ergot 10 est quant à elle sensiblement plate ou, plus précisément, elle présente une surface extérieure sensiblement parallèle au plan de la bande. Il existe ainsi, la démarcation entre le pied 10C de l'ergot et la tête 10B de ce dernier, un écrouissage favorisant la rigidité de l'ergot.

La première extrémité 1A de la bande 1 présente une bavette 28 qui s'étend à l'avant de l'ergot. Plus précisément, cette bavette 28 s'étend entre l'ergot 10 et l'extrémité libre 1'A de la bande. Cette bavette porte une saillie 30 qui sert au pré-accrochage du collier. En effet, la deuxième extrémité 1B de la bande 1 présente, à l'arrière de l'oreille, une fente longitudinale de pré-accrochage 32 dans laquelle la saillie 30 est engagée pour réaliser un pré-accrochage du collier.

Plus précisément, cette saillie 30 est formée dans une portion d'extrémité libre 28A de la bavette 28, dont la largeur LS est inférieure à la largeur nominale LB de la bande. Cette largeur nominale est la largeur courante de la bande dans les régions dans lesquelles sa largeur n'est pas réduite par la présence du bossage, comme on l'a évoqué en référence à la figure 3.

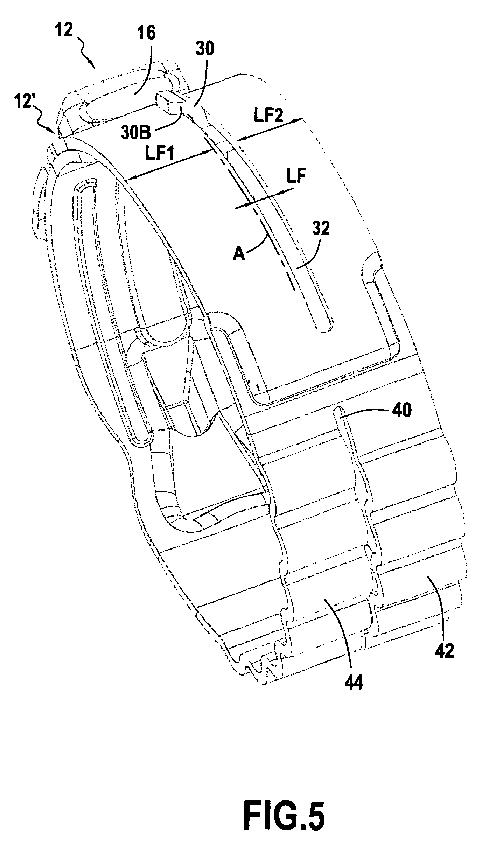

On voit sur les figures 1 et 5 que la fente de pré-accrochage 32 s'étend, en s'éloignant de l'oreille 12, au moins jusqu'à un renfoncement interne 34. Il s'agit d'un renfoncement sur la face interne du collier, tournée vers le centre géométrique O, tandis que sa délimitation forme un bossage du côté extérieur de la bande, comme on le voit sur la figure 5. La largeur L34 du renfoncement interne 34 est adaptée à recevoir la portion d'extrémité libre 28A de la bavette à l'état serré du collier.

La profondeur du renfoncement interne 34, mesurée radialement, est sensiblement égale à l'épaisseur de la bande, de sorte que, lorsque la portion d'extrémité libre 28A de la bavette est disposée dans ce renfoncement, la face interne de la bavette et les faces internes des marges 35 du renfoncement 34 sont situées sur un même cercle. Il existe ainsi une continuité d'appui sur l'objet devant être serré par le collier.

La saillie 30 étant située dans cette portion d'extrémité libre 28, à proximité immédiate de l'extrémité libre 1'A de la bande, il n'est pas nécessaire de prolonger significativement la bavette au-delà de cette saillie 30, de sorte que la longueur de la bande est calculée au plus juste. La saillie de pré-accrochage 30 est formée par une languette, qui est découpée dans la bande (on voit la face interne de la découpe correspondante 36 sur la figure 1). Cette languette reste rattachée à la bande par l'un de ses bords longitudinaux 30A (voir figure 1) selon lequel elle est pliée pour être redressée radialement. Par ailleurs, la largeur LF de la fente 32 étant sensiblement égale à l'épaisseur de la bande, c'est-à-dire à la largeur du pied de la saillie 30, l'extrémité libre 30B de cette saillie, formée à partir de la languette, est repliée pour éviter que la saillie 30 ne ressorte de la fente vers l'intérieur. La largeur totale LD de la découpe 36 dans laquelle est réalisée la languette formant la saillie 30 est de l'ordre de 3 fois l'épaisseur de la bande. De cette manière, la longueur de la languette dans laquelle est formée la saillie 30 est suffisante pour que cette languette puisse passer à travers la fente 32, en étant repliée à son extrémité libre 30B pour former la saillie 30.

La découpe 36 dans laquelle est formée la languette précitée est décalée par rapport à l'axe longitudinal médian A de la bande. En d'autres termes, le bord 30A de cette découpe par lequel la languette est rattachée à la bande ne se trouve pas sur cet axe A, mais à une distance D de l'axe en question. Le pied de la saillie 30 est donc déporté latéralement par rapport à l'axe longitudinal médian de la bande. On s'assure ainsi que, bien que la découpe 36 soit formée dans la portion d'extrémité libre 28A de la bavette dont la largeur LS est réduite par rapport à la largeur nominale LB de la bande, cette découpe ne vienne pas trop près des bords longitudinaux de la bande. Les bords longitudinaux 30A et 36A de la découpe 36 sont sensiblement situés à égale distance des bords longitudinaux de la bande dans la portion d'extrémité libre 28A. Cette distance d est égale à environ 1/4 à 1/3 de la largeur nominale LB de la bande. On évite ainsi que la présence de la découpe 36 ne vienne affaiblir la résistance mécanique de la bande dans la région dans laquelle elle est formée.

On voit sur la figure 5 que la fente 32 n'est pas non plus centrée sur l'axe longitudinal médian A de la bande. En effet, les largeurs de bande LF1 et LF2 mesurées de part et d'autre de la fente 32 sont inégales. La différence entre ces deux largeurs est sensiblement égale à la distance D de déport du bord 30A de la découpe 36 précitée. Ainsi, le pré-accrochage servant à maintenir le collier à l'état fermé même avant son serrage, peut être réalisé en calculant au plus juste la longueur de la bande, et en déterminant la largeur LF de la fente 32 de manière optimale, pour éviter une largeur trop importante qui viendrait localement affaiblir la résistance mécanique de la bande.

Par ailleurs, la bande présente, entre le bossage commun 18 et l'oreille 12, plus précisément entre le bossage commun 18 et le renfoncement interne 34, une fente médiane 40, de part et d'autre de laquelle sont formées des ondulations transversales 42, 44 en opposition de phase. Ces ondulations forment des vagues, en saillie radiale par rapport au plan de la bande. Les sommets des ondulations 42 correspondent aux creux des ondulations 44. Les ondulations forment des réserves d'élasticité ou de capacité, permettant d'augmenter la longueur du collier, une fois serré, pour adapter l'effort de serrage aux dilatations de l'objet serré par le collier, en particulier sous l'effet de variations de température. Cette disposition en opposition de phase permet d'éviter une discontinuité d'appui sous les ondulations. De plus, le fait de choisir un grand nombre d'ondulations en vague (entre 5 et 10) permet d'obtenir une importante réserve de capacité, tout en réalisant ces ondulations avec une faible hauteur radiale, par exemple du même ordre de grandeur que les hauteurs H et H' précitées, soit 2 à 5 mm, de préférence 2 à 3 mm pour un collier dont la bande a une épaisseur de 0,6 à 0,8 mm.

L'oreille 12 est formée par un bossage d'oreille, de part et d'autre duquel sont ménagées des marges latérales 12' qui s'étendent sensiblement dans le plan de la bande. Cette conformation renforce la rigidité de l'oreille. Bien évidement, la largeur de l'oreille, mesurée sur sa face interne, est suffisante pour que cette dernière puisse coiffer le pied du bossage 10. Selon le procédé de l'invention, on fournit la bande de métal 1, on réalise l'ergot d'accrochage 10 et l'oreille 12 en saillie radiale vers l'extérieur, on équipe cette oreille de la lumière 13, on réalise les surfaces de prise 14 et 16 et on enroule la bande sur elle-même. On peut réaliser une partie des étapes précitées alors que la bande est à plat, ou bien l'enrouler au cours des étapes de formation. De préférence, les bossages sont au moins en partie réalisés alors que la bande est à plat, et les marges longitudinales ménagées, de part et d'autre du bossage commun 18 et de part et d'autre de l'oreille 12 servent de surfaces de roulage, facilitant l'enroulement de la bande. Pour réaliser l'ergot 10 et la surface de prise 14 située à l'arrière de l'ergot, on forme le bossage commun 18 qui présente des joues latérales 20 relevées par rapport au plan de la bande.

Les figures 6A et 6B montrent deux étapes successives de formation du bossage commun 18, avec l'ergot 10 et la surface de prise 14. Dans une première passe, on réalise un bossage commun intermédiaire 18' sur une hauteur h' inférieure à la hauteur H' finale du bossage commun. A partir de cette situation, on relève une partie avant du bossage commun intermédiaire 18' pour former l'ergot 10, et on relève une partie arrière de ce bossage commun intermédiaire pour former la surface de prise 14, tout en ménageant un décrochement 24 entre l'ergot 10 et la surface de prise 14. De préférence, la hauteur de la base du décrochement 24, qui est la hauteur h des joues latérales communes 20, est sensiblement égale à la hauteur h' du bossage commun intermédiaire. Ainsi, pour réaliser le bossage commun final, il suffit de relever la partie avant du bossage intermédiaire 18', tout en pratiquant la découpe qui sert à ménager le bord d'accrochage 10A de l'ergot, et de relever la partie arrière du bossage commun intermédiaire 18' progressivement, en formant ainsi le décrochement 24. La découpe formant le bord d'accrochage 10A est réalisée sensiblement transversalement, à ceci près qu'elle peut avoir une forme convexe, comme on le voit en particulier sur la figure 3. Les parties avant 19A et arrière 19B du bossage commun 18 sont délimitées de part et d'autre de cette découpe. Le bossage commun 18' peut être réalisé à plat, tandis que les étapes suivantes de réalisation du bossage 18 peuvent être réalisées à plat ou, au moins en partie, alors que la bande a déjà été enroulée.

Pour réaliser la saillie de pré-accrochage 30, on réalise la découpe 36, et on replie la languette ainsi formée sensiblement perpendiculairement au plan de la bande. On roule ensuite la bande, de manière à faire passer cette languette redressée à travers la fente, puis on rabat la portion d'extrémité libre de la languette à l'issue du roulage.

Il convient encore de relever que, comme on le voit en particulier sur la figure 3, la bavette 28 présente des nervures longitudinales de rigidification. Il s'agit en l'espèce d'une nervure centrale 46 alignée sur l'axe longitudinal médian A de la bande, et de deux nervures latérales 48. En l'espèce, ces nervures sont formées pour faire saillie sur la face intérieure de la bande. Elles pourraient toutefois également être formées en saillie externe. On voit que l'extrémité arrière 46A de la nervure centrale 46, éloignée de l'extrémité libre 1'A de la bande, empiète légèrement sur le pied 10C de l'ergot d'accrochage 10. Il en résulte, à la base de ce pied, un écrouissage important qui renforce la rigidité de l'ergot 10. De même, les nervures 48 s'étendent vers l'arrière, c'est-à-dire en s'éloignant de l'extrémité libre 1'A, le long des joues latérales du bossage commun 18. Leurs extrémités arrière 48A sont situées légèrement au-delà de la zone de rattachement de la découpe formant le bord libre 10A de l'ergot avec les joues latérales 20. Ceci renforce la rigidité de ces joues latérales et évite les risques de déchirement sur les côtés de la découpe en question.

De manière générale, le collier de l'invention est adapté à toute utilisation dans laquelle un serrage efficace et simple à mettre en oeuvre est recherché, conjointement avec un faible encombrement radial du collier. Le collier peut par exemple servir au serrage d'un tuyau sur un embout, dans le compartiment moteur d'un véhicule, ou bien au serrage d'un soufflet, par exemple un soufflet de colonne de direction. Le collier de l'invention est particulièrement adapté au serrage de pièces rotatives telles que des soufflets de transmission. En effet, son centre de gravité reste très proche du centre géométrique du cercle qu'il forme et son serrage s'opère par accrochage, de manière très fiable.

## Revendications

1. Collier de serrage réalisé à partir d'une bande de métal (1) enroulée sur elle-même, comprenant un ergot d'accrochage (10) formé en saillie radiale vers l'extérieur au voisinage de la première extrémité (1A) de la bande et une oreille (12), formée en saillie radiale vers l'extérieur au voisinage de la deuxième extrémité (1B) de la bande et présentant une lumière (13) dans laquelle peut être insérée une partie d'extrémité libre (10A) de l'ergot pour l'accrochage et le serrage du collier alors que l'oreille coiffe une partie de pied (10C) de l'ergot, le collier présentant en outre des surfaces de prise (16, 14) pour un outil de serrage, qui sont en saillie radiale vers l'extérieur et sont respectivement situées à l'arrière de l'oreille (12) et à l'arrière de l'ergot (10),
**caractérisé en ce que** l'ergot (10) et la surface de prise (14) qui est située à l'arrière de cet ergot sont formés dans un bossage commun (18) et présentent des joues latérales (20), relevées par rapport au plan de la bande, qui leur sont communes.

2. Collier de serrage selon la revendication 1, **caractérisé en ce que** l'ergot (10) présente une extrémité libre d'accrochage formée par le bord (10A) d'une découpe, les joues latérales communes (20) s'étendant, sur les côtés respectifs de l'ergot, entre le plan (C) de la bande (1) et une extrémité (10'A) du bord de la découpe.

3. Collier de serrage selon la revendication 2, **caractérisé en ce que** le bord de la découpe (10A) présente, en vue de dessus, une forme convexe.

4. Collier de serrage selon l'une quelconque des revendication 1 à 3, **caractérisé en ce qu'**il présente des marges latérales (22) s'étendant, dans le plan de la bande, de part et d'autre des joues latérales communes (20).

5. Collier de serrage selon l'une quelconque des revendications 1 à 4, **caractérisé en ce que** l'ergot (10) est formé dans une partie du bossage commun (18) qui est moins large que la surface de prise d'outil (14) située à l'arrière de l'ergot (10).

6. Collier de serrage selon l'une quelconque des revendications 1 à 5, **caractérisé en ce que** les surfaces de prise (14, 16) présentent des formes en cuvette.

7. Collier de serrage selon l'une quelconque des revendications 1 à 6, **caractérisé en ce que** l'ergot (10) présente une hauteur radiale maximale (H) au plus sensiblement égale à la hauteur radiale maximale (H') de la partie du bossage commun (18) dans laquelle est formée la surface de prise (14) située à l'arrière de l'ergot et **en ce que** le bossage commun présente un décrochement (24) à l'arrière de l'ergot adjacent audit ergot.

8. Collier de serrage selon l'une quelconque des revendications 1 à 7, **caractérisé en ce que** l'oreille (12) présente une partie avant (12A), dans laquelle est formée la lumière (13) et qui se rapproche du plan (C) de la bande par rapport à une partie arrière (12B) de l'oreille.

9. Collier de serrage selon la revendication 8, **caractérisé en ce que** la lumière (13) de l'oreille (12) présente un bord avant (13A) qui est sensiblement situé dans le plan de la bande.

10. Collier de serrage selon l'une quelconque des revendications 1 à 9, **caractérisé en ce que** l'ergot (10) a une tête (10B) qui présente une surface extérieure sensiblement parallèle au plan (C) de la bande.

11. Collier de serrage selon l'une quelconque des revendications 1 à 10, **caractérisé en ce que** la première extrémité (1A) de la bande (1) présente une bavette (28) qui s'étend à l'avant de l'ergot (10) et qui porte une saillie de pré-accrochage (30), tandis que la deuxième extrémité (1B) de la bande (1) présente, à l'arrière de l'oreille, une fente longitudinale de pré-accrochage (32) dans laquelle ladite saillie (30) est engagée pour réaliser un pré-accrochage du collier et **en ce que** la saillie de pré-accrochage (30) est formée dans une portion d'extrémité libre (28A) de la bavette (28) ayant une largeur (LS) inférieure à la largeur de la bande, tandis que la fente de pré-accrochage (32) s'étend, en s'éloignant de l'oreille (12), au moins jusqu'à un renfoncement interne (34) apte à recevoir ladite portion d'extrémité libre (28A) de la bavette (28).

12. Collier de serrage selon la revendication 11, **caractérisé en ce que** la saillie de pré-accrochage (30) est formée par une languette, découpée dans la bande et redressée, et **en ce que** la découpe (36) dans laquelle est formée cette languette est décalée par rapport à un axe longitudinal médian (A) de la bande.

13. Collier de serrage selon la revendication 12, **caractérisé en ce que** la fente de pré-accrochage (32) est également décalée par rapport audit axe longitudinal, dans le même sens que la découpe (36) dans laquelle est formée la languette.

14. Collier de serrage selon l'une quelconque des revendications 1 à 13, **caractérisé en ce que** la bande présente entre le bossage commun (18) et l'oreille (12) une fente longitudinale médiane (40), de part et d'autre de laquelle sont formées des ondulations transversales (42, 44) en opposition de phase.

15. Collier de serrage selon l'une quelconque des revendications 1 à 14, **caractérisé en ce que** l'oreille (12) est formée par un bossage d'oreille, de part et d'autre duquel sont ménagées des marges latérales (12') qui s'étendent sensiblement dans le plan (C) de la bande.

16. Procédé pour fabriquer un collier de serrage, dans lequel on fournit une bande de métal (1), on réalise un ergot d'accrochage (10) en saillie radiale vers l'extérieur au voisinage de la première extrémité (1A) de la bande (1), on réalise, en saillie radiale vers l'extérieur au voisinage de la deuxième extrémité (13) de la bande, une oreille (12) présentant une lumière (13) dans laquelle peut être insérée une partie d'extrémité libre (10A) de l'ergot pour l'accrochage et le serrage du collier alors que l'oreille coiffe une partie de pied (10C) de l'ergot, on réalise des surfaces de prise (14, 16) pour un outil de serrage qui sont en saillie radiale vers l'extérieur et sont respectivement situées à l'arrière de l'oreille et à l'arrière de l'ergot, et on enroule la bande sur elle-même,
**caractérisé en ce que**, pour réaliser l'ergot (10) et la surface de prise (14) qui est située à l'arrière de l'ergot, on forme un bossage commun (18) présentant des joues latérales relevées par rapport au plan de la bande.

17. Procédé selon la revendication 16, **caractérisé en ce que**, après avoir réalisé un bossage commun intermédiaire (18'), on forme le bossage commun (18) en formant l'ergot (10) dans une partie avant de ce bossage commun, on forme la surface d'accrochage (14) dans une partie arrière de ce bossage et on ménage, à l'arrière de l'ergot, un décrochement (24) adjacent à cet ergot (10).

18. Procédé selon la revendication 17, **caractérisé en ce que**, pour former l'ergot (10), on réalise une découpe sensiblement transversale dans le bossage commun, de manière à délimiter lesdites parties avant et arrière (19A, 19B) de ce bossage de part et d'autre de la découpe.

19. Procédé selon la revendication 17 ou 18, **caractérisé en ce que**, pour former l'ergot (10) et la surface de prise (14) située à l'arrière de l'ergot (10), on relève la partie avant du bossage commun intermédiaire (18') et on relève une portion d'extrémité arrière de la partie arrière du bossage commun intermédiaire (18') en formant, dans ladite partie arrière, un décrochement (24) adjacent à l'ergot (10).

## Claims

1. A clamping collar made from a metal strip (1) formed into a loop, the collar having a fastening stud (10) projecting radially outwards in the vicinity of the first end (1A) of the strip and an ear (12) projecting radially outwards in the vicinity of the second end (1B) of the strip and provided with an aperture (13) into which a free end portion (10A) of the stud can be inserted for the purposes of fastening and of tightening the collar while the ear fits over a foot portion (10C) of the stud, the collar further having engagement surfaces (16, 14) for engaging with a tightening tool, which surfaces project radially outwards and are situated respectively behind the ear (12) and behind the stud (10);
said clamping collar being **characterized in that** the stud (10) and the engagement surface (14) that is situated behind the stud are formed in a common projection (18) and have side cheeks (20) that are raised relative to the plane of the strip, and that are common to them.

2. A clamping collar according to claim 1, **characterized in that** the stud (10) has a fastening free end formed by the edge (10A) of a cut, the common side cheeks (20) extending on respective sides of the stud between the plane (C) of the strip (1) and one end (10'A) of the edge of the cut.

3. A clamping collar according to claim 2, **characterized in that**, as seen from above, the edge of the cut (10A) has a convex shape.

4. A clamping collar according to any one of claims 1 to 3, **characterized in that** it has side margins (22) extending in the plane of the strip on either side of the common side cheeks (20).

5. A clamping collar according to any one of claims 1 to 4, **characterized in that** the stud (10) is formed in a portion of the common projection (18) that is narrower than the tool engagement surface (14) situated behind the stud (10).

6. A clamping collar according to any one of claims 1 to 5, **characterized in that** the engagement surfaces (14, 16) have dish shapes.

7. A clamping collar according to any one of claims 1 to 6, **characterized in that** the stud (10) has a maximum radial height (H) at the most substantially equal to the maximum radial height (H') of that portion of the common projection (18) in which the engagement surface (14) situated behind the stud is formed, and **in that** the common projection is provided with a setback (24) behind the stud and adjacent to said stud.

8. A clamping collar according to any one of claims 1 to 7, **characterized in that** the ear (12) has a front portion (12A) in which the aperture (13) is formed and that comes closer to the plane (C) of the strip than a back portion (12B) of the ear.

9. A clamping collar according to claim 8, **characterized in that** the aperture (13) of the ear (12) has a front edge (13A) that is situated substantially in the plane of the strip.

10. A clamping collar according to any one of claims 1 to 9, **characterized in that** the stud (10) has a head (10B) that has an outside surface substantially parallel to the plane (C) of the strip.

11. A clamping collar according to any one of claims 1 to 10, **characterized in that** the first end (1A) of the strip (1) has a tab (28) that extends in front of the stud (10) and that is provided with a pre-fastening projecting catch (30), while the second end (1B) of the strip (1) has, behind the ear, a pre-fastening longitudinal slot (32) into which said projecting catch (30) is engaged so as to pre-fasten the collar, and **in that** the pre-fastening projecting catch (30) is formed in a free end portion (28A) of the tab (28) that has a width (LS) smaller than the width of the strip, while the pre-fastening slot (32) extends, going away from the ear (12), at least to an internal recess (34) suitable for receiving said free end portion (28A) of the tab (28).

12. A clamping collar according to claim 11, **characterized in that** the pre-fastening projecting catch (30) is formed by a tongue, cut out from the strip and folded out therefrom, and **in that** the cutout (36) in which said tongue is formed is offset relative to a middle longitudinal axis (A) of the strip.

13. A clamping collar according to claim 12, **characterized in that** the pre-fastening slot (32) is also offset relative to said longitudinal axis, in the same direction as the cutout (36) in which the tongue is formed.

14. A clamping collar according to any one of claims 1 to 13, **characterized in that**, between the common projection (18) and the ear (12), the strip has a middle longitudinal slot (40), on either side of which transverse undulations (42, 44) are formed that are in phase opposition.

15. A clamping collar according to any one of claims 1 to 14, **characterized in that** the ear (12) is formed by an ear projection on either side of which side margins (12') are provided that extend substantially in the plane (C) of the strip.

16. A method of manufacturing a clamping collar, which method consists in providing a strip of metal (1), in forming a fastening stud (10) that projects radially outwards in the vicinity of the first end (1A) of the strip (1), in forming an ear (12) that projects radially outwards in the vicinity of the second end (1B) of the strip, which ear has an aperture (13) into which a free end portion (10A) of the stud can be inserted for the purposes of fastening and of tightening the collar while the stud fits over a foot portion (10C) of the stud, in forming engagement surfaces (14, 16) for engaging with a tightening tool, which surfaces project radially outwards and are situated respectively behind the ear and behind the stud, and in forming the strip into a loop;
said method being **characterized in that**, in order to form the stud (10) and the engagement surface (14) that is situated behind the stud, a common projection (18) is formed that has side cheeks that are raised relative to the plane of the strip.

17. A method according to claim 16, **characterized in that**, after an intermediate common projection (18') has been formed, the common projection (18) is formed by forming the stud (10) in a front portion of said common projection, the engagement surface (14) is formed in a back portion of said projection, and, behind the stud, a setback (24) is formed adjacent to said stud (10).

18. A method according to claim 17, **characterized in that**, in order to form the stud (10), a substantially transverse cut is made in the common projection, so as to define said front and back portions (19A, 19B) of the projection on either side of the cut.

19. A method according to claim 17 or claim 18, **characterized in that**, in order to form the stud (10) and the engagement surface (14) situated behind the stud (10), the front portion of the intermediate common projection (18') is raised, and a back end portion of the back portion of the intermediate common projection (18') is raised while forming, in said back portion, a setback (24) adjacent to the stud (10).

## Patentansprüche

1. Klemmschelle, die aus einem um sich selbst gewickelten Metallband (1) gebildet ist, umfassend eine Rastnase (10), die radial nach außen vorspringend in der Nähe des ersten Endes (1A) des Bandes ausgebildet ist, sowie ein Ohr (12), das radial nach außen vorspringend in der Nähe des zweiten Endes (1 B) des Bandes ausgebildet ist und eine Öffnung (13) aufweist, in die ein freier Endteil (10A) der Nase für das Verhaken und Festklemmen der Schelle eingeführt werden kann, während das Ohr einen Fußteil (10C) der Nase bedeckt, wobei die Schelle ferner Greifflächen (16, 14) für ein Klemmwerkzeug aufweist, die radial nach außen vorspringen und hinten an dem Ohr (12) bzw. hinter der Nase (10) gelegen sind,
**dadurch gekennzeichnet, daß** die Nase (10) und die Greiffläche (14), die sich hinter dieser Nase befindet, in einem gemeinsamen Buckel (18) ausgebildet sind und gegenüber der Ebene des Bandes erhabene Seitenwangen (20) aufweisen, die ihnen gemein sind.

2. Klemmschelle nach Anspruch 1, **dadurch gekennzeichnet, daß** die Nase (10) ein freies Rastende aufweist, das von dem Rand (10A) eines Ausschnitts gebildet ist, wobei die gemeinsamen Seitenwangen (20) sich auf den jeweiligen Seiten der Nase zwischen der Ebene (C) des Bandes (1) und einem Ende (10'A) des Randes des Ausschnitts erstrecken.

3. Klemmschelle nach Anspruch 2, **dadurch gekennzeichnet, daß** der Rand (10A) des Ausschnitts in Draufsicht gesehen eine konvexe Form aufweist.

4. Klemmschelle nach einem der Ansprüche 1 bis 3, **dadurch gekennzeichnet, daß** sie Seitenbereiche (22) aufweist, die sich in der Ebene des Bandes auf beiden Seiten der gemeinsamen Seitenwangen (20) erstrecken.

5. Klemmschelle nach einem der Ansprüche 1 bis 4, **dadurch gekennzeichnet, daß** die Nase (10) in einem Teil des gemeinsamen Buckels (18) ausgebildet ist, der schmaler als die hinter der Nase (10) befindliche Werkzeuggreiffläche (14) ist.

6. Klemmschelle nach einem der Ansprüche 1 bis 5, **dadurch gekennzeichnet, daß** die Greifflächen (14, 16) schalenförmig ausgebildet sind.

7. Klemmschelle nach einem der Ansprüche 1 bis 6, **dadurch gekennzeichnet, daß** die Nase (10) eine maximale radiale Höhe (H) aufweist, die höchstens im wesentlichen gleich der maximalen radialen Höhe (H') des Teils des gemeinsamen Buckels (18) ist, in dem die hinter der Nase befindliche Greiffläche (14) ausgebildet ist, und daß der gemeinsame Buckel hinter der Nase einen der Nase benachbarten Absatz (24) aufweist.

8. Klemmschelle nach einem der Ansprüche 1 bis 7, **dadurch gekennzeichnet, daß** das Ohr (12) einen vorderen Teil (12A) aufweist, in dem die Öffnung (13) ausgebildet ist und der sich in bezug auf einen hinteren Teil (12B) des Ohrs der Ebene (C) des Bandes nähert.

9. Klemmschelle nach Anspruch 8, **dadurch gekennzeichnet, daß** die Öffnung (13) des Ohrs (12) einen vorderen Rand (13A) aufweist, der im wesentlichen in der Ebene des Bandes gelegen ist.

10. Klemmschelle nach einem der Ansprüche 1 bis 9, **dadurch gekennzeichnet, daß** die Nase (10) einen Kopf (10B) hat, der eine zur Ebene (C) des Bandes im wesentlichen parallel verlaufende Außenseite aufweist.

11. Klemmschelle nach einem der Ansprüche 1 bis 10, **dadurch gekennzeichnet, daß** das erste Ende (1 A) des Bandes (1) einen Latz (28) aufweist, der sich vor der Nase (10) erstreckt und der einen Vorrastvorsprung (30) trägt, während das zweite Ende (1 B) des Bandes (1) hinter dem Ohr einen Vorrastlängsschlitz (32) aufweist, in den der Vorsprung (30) eingesteckt wird, um ein Vorrasten der Schelle zu bewirken, und daß der Vorrastvorsprung (30) in einem freien Endabschnitt (28A) des Latzes (28) ausgebildet ist, der eine geringere Breite (LS) als das Band aufweist, während der Vorrastschlitz (32) sich von dem Ohr (12) entfernend wenigstens bis zu einer innenliegenden Vertiefung (34) erstreckt, die geeignet ist, den freien Endabschnitt (28A) des Latzes (28) aufzunehmen.

12. Klemmschelle nach Anspruch 11, **dadurch gekennzeichnet, daß** der Vorrastvorsprung (30) durch eine Lasche gebildet ist, die aus dem Band ausgeschnitten und aufgerichtet ist, und daß der Ausschnitt (36), in dem diese Lasche ausgebildet ist, gegenüber einer Längsmittelachse (A) des Bandes versetzt ist.

13. Klemmschelle nach Anspruch 12, **dadurch gekennzeichnet, daß** der Vorrastschlitz (32) ebenfalls gegenüber der Längsachse in der gleichen Richtung wie der Ausschnitt (36), in dem die Lasche ausgebildet ist, versetzt ist.

14. Klemmschelle nach einem der Ansprüche 1 bis 13, **dadurch gekennzeichnet, daß** das Band zwischen dem gemeinsamen Buckel (18) und dem Ohr (12) einen mittleren Längsschlitz (40) aufweist, auf dessen beiden Seiten gegenphasige Querwellen (42, 44) gebildet sind.

15. Klemmschelle nach einem der Ansprüche 1 bis 14, **dadurch gekennzeichnet, daß** das Ohr (12) durch einen Ohrbuckel gebildet ist, auf dessen beiden Seiten Seitenbereiche (12') ausgebildet sind, die sich im wesentlichen in der Ebene (C) des Bandes erstrecken.

16. Verfahren zur Herstellung einer Klemmschelle, wobei ein Metallband (1) bereit gestellt wird, eine Rastnase (10) radial nach außen vorspringend in der Nähe des ersten Endes (1 A) des Bandes (1) ausgebildet wird, radial nach außen vorspringend in der Nähe des zweiten Endes (1 B) des Bandes ein Ohr (12) ausgebildet wird, das eine Öffnung (13) aufweist, in die ein freier Endteil (10A) der Nase für das Verhaken und Festklemmen der Schelle eingeführt werden kann, während das Ohr einen Fußteil (10C) der Nase bedeckt, Greifflächen (14, 16) für ein Klemmwerkzeug ausgebildet werden, die radial nach außen vorspringen und hinten an dem Ohr bzw. hinter der Nase gelegen sind, und das Band um sich selbst gewickelt wird,
**dadurch gekennzeichnet, daß** zur Ausbildung der Nase (10) und der Greiffläche (14), die sich hinter der Nase befindet, ein gemeinsamer Buckel (18) gebildet wird, der gegenüber der Ebene des Bandes erhabene Seitenwangen aufweist.

17. Verfahren nach Anspruch 16, **dadurch gekennzeichnet, daß** nach Ausbildung eines gemeinsamen Zwischenbuckels (18') der gemeinsame Buckel (18) unter Ausbilden der Nase (10) in einem vorderen Teil dieses gemeinsamen Buckels gebildet wird, die Angreiffläche (14) in einem hinteren Teil dieses Buckels gebildet wird und hinter der Nase ein dieser Nase (10) benachbarter Absatz (24) ausgebildet wird.

18. Verfahren nach Anspruch 17, **dadurch gekennzeichnet, daß** für die Ausbildung der Nase (10) ein im wesentlichen querverlaufender Ausschnitt in dem gemeinsamen Buckel gebildet wird, derart, daß der vordere und der hintere Teil (19A, 19B) dieses Buckels auf beiden Seiten des Ausschnitts begrenzt werden.

19. Verfahren nach Anspruch 17 oder 18, **dadurch gekennzeichnet, daß** zur Ausbildung der Nase (10) und der hinter der Nase (10) gelegenen Greiffläche (14) der vordere Teil des gemeinsamen Zwischenbuckels (18') angehoben wird und ein hinterer Endabschnitt des hinteren Teils des gemeinsamen Zwischenbuckels (18'), unter Ausbildung eines der Nase (10) benachbarten Absatzes (24) in dem hinteren Teil, angehoben wird.
